# EUROPÄISCHE PATENTSCHRIFT

(11) **EP 2 868 827 B1**
(45) Veröffentlichungstag und Bekanntmachung des Hinweises auf die Patenterteilung: **10.05.2017**
(21) Anmeldenummer: 14003636.9
(22) Anmeldetag: 27.10.2014
(51) Int. Cl.: E04C 3/00, E04C 3/09, G02B 6/44

(54) **Profilschiene**
Profile rail
Rail profilé

(30) Priorität: 31.10.2013 DE 102013018352
(43) Veröffentlichungstag der Anmeldung: 06.05.2015
(73) Patentinhaber: Welser Profile Austria GmbH, 3341 Ybbsitz (AT)
(72) Erfinder: Welser, Thomas, 3341 Ybbsitz (AT); Fuchslueger, Hubert, 3342 Ybbsitz (AT)
(74) Vertreter: Grünecker Patent- und Rechtsanwälte PartG mbB

(56) Entgegenhaltungen:
- EP-A1- 0 707 995
- EP-A1- 1 093 902
- WO-A1-2006/092734
- DE-A1- 3 036 058
- DE-C1- 10 101 778
- DE-C1- 10 124 484
- US-A- 3 321 571

## Beschreibung

Die vorliegende Erfindung betrifft eine offene Profilschiene mit einem Basisabschnitt und wenigstens einem sich an den Basisabschnitt anschließenden und von diesem abgewinkelten Schenkelabschnitt.

Aus Metallstreifen gefertigte und gebogene Profilschienen werden in vielen Bereichen des Alltags, sowie in der Bauindustrie in verschiedensten Anwendungen eingesetzt. Hierbei können entsprechende Profilschienen als L-Schienen, C-Schienen, U-Schienen oder auch Hutschienen ausgebildet sein, um nur einige Möglichkeiten zu nennen.

Da entsprechende Profile je nach Anwendung in den unterschiedlichsten Maßen gebogen werden können, sind sie flexibel einsetzbar. Beispielsweise können offene Profilschienen in vorgefertigte Fugen eingesetzt werden, um die Fugen solchermaßen auf einfache Art und Weise zu verschließen, wobei das offene Profil anschließend noch befüllt werden kann.

In diesem Zusammenhang ist es beispielsweise bekannt, Glasfaserkabel unter Verwendung der Stufentrench-Methode Nano-Trench® zu verlegen, bei welcher lediglich eine dünne Fuge am Straßenrand eingebracht wird, in welche dann die Kabel in einem unmittelbar nachfolgenden zweiten Schritt eingelegt werden. Um die Kabel zu schützen ist die Fuge als Stufenfuge ausgebildet, einer unteren engen Fuge, in welche die Kabel eingelegt werden, welche sich anschließend etwas erweitert und eine breitere Fuge bildet. Die Kabel selber werden einerseits durch zusätzlich eingebrachten Sand, andererseits durch ein oben auf den Kabeln angeordnetes zusätzliches Schutzrohr mit Kupferdraht in der Fuge gehalten. Anschließend wird die breitere Fuge mit Asphalt oder Zweikomponentenvergussmittel verfüllt. Ein entsprechendes Verfahren ist vorteilhaft, da das Verfahren viel schneller als herkömmliche Verfahren durchgeführt werden kann, bei gleichzeitig geringerer Verkehrsbehinderung.

Zwar hat sich hier das Verlegen der Kabel bzw. Rohre mit Granulat oder Sand zur Fixierung der Kabel relativ gut bewährt, wünschenswert wäre jedoch eine zusätzliche Schutzmaßnahme, die die Kabel noch besser schützt, und ein vollständiges Abdecken der Kabel sicherstellt.

Hier stellt das Einführen von offenen Profilschienen, insbesondere C-Schienen, eine einfache Möglichkeit dar, die bereits eingelegten Rohre zu schützen, indem nach dem Einlegen der Rohre und vor dem Verfüllen der zweiten Stufe ein C-Rohr in die Fuge eingelegt wird, das auf den Absätzen der verbreiterten Fuge aufliegen kann, und einen sicheren Schutz der Rohre gewährleistet. Eine entsprechende Verlegung von C-Profilen ist jedoch n ohne Weiteres möglich, solange es sich um eine gerade verlaufende Fuge handelt.

Im normalen Straßenverkehr bzw. unter üblichen Bedingungen kann jedoch nicht gewährleistet werden, dass eine entsprechende Fuge immer vollständig gerade verläuft. Einerseits können Behinderungen im Bereich der Straße, z. B. Abflusselemente etc. eine gekrümmte Führung der Fuge notwendig machen, andererseits kann auch die normale Führung der Geräte zu einer gewissen Krümmung der Fuge führen. Sobald die Fuge jedoch mit einem gewissen Radius verläuft, können die bekannten C-Schienen nicht mehr verlegt werden, da sich diese nicht verbiegen lassen.

Eine weitere Profilschiene gemäß dem Oberbegriff des Anspruchs 1 ist aus der DE 3036058 bekannt. Bei der in dieser Druckschrift beschriebenen Profilschiene handelt es sich um eine Befestigungsleiste für Fensterscheiben, wobei die Profilschiene in Kunststoffelemente eingebettet ist. Im Einzelnen setzt sich die Profilschiene aus U-förmigen Metallelementen zusammen, die seitlich nebeneinander und im Abstand zueinander zur Ausbildung eines U-Profils angeordnet sind. Jedes Element kann hierbei mit dem benachbarten Element durch ein oder mehrere kurze, biegsame Verbindungsglieder verbunden sein. So können zwei U-förmig gebogene Metallstreifen über einen Mittelsteg verbunden sein, oder im Bereich ihrer U-Schenkel Stege aufweisen. Die abwechselnde Anordnung der Mittelstege und seitlichen Stege setzt sich der Länge nach über die Metalleinlage fort.

Aufgabe der vorliegenden Erfindung ist es daher, eine offene Profilschiene bereitzustellen, welche auf einfache Art und Weise gebogen werden kann, so dass diese auch für gekrümmte Anwendungen eingesetzt werden kann, beispielsweise in gekrümmte Fugen eingeführt werden kann.

Diese Aufgabe wird durch eine offene Profilschiene gelöst mit einem Basisabschnitt und zwei sich an den Basisabschnitt und von diesen abgewinkelten Schenkelabschnitten, wobei die Profilschiene quer zu ihrer Längserstreckung Schlitze und Einschnitte aufweist, welche parallel zueinander ausgebildet sind, wobei die Schlitze direkt in dem Material ausgeführt sind, die Endpunkte des Schlitzes nicht offen sind, und die Einschnitte unmittelbar an einer Kante eines Schenkelabschnitts zu dieser Kante offen ausgebildet sind, und die Schlitze und Einschnitte in den gegenüberliegenden Schenkelabschnitten und dem Basisabschnitt ausgebildet sind, wobei sich zumindest die Schitze von einem der Schenkelabschnitte in den anschließenden Basisabschnitt erstrecken, wobei quer zur Längserstreckung der Profilschiene in Verlängerung auf jeden Einschnitt ein Schlitz unter Ausbildung eines Stegelementes folgt, wobei jeder Schenkelabschnitt mehrere unter einem vorbestimmten Abstand zueinander angeordnete Gruppen von Schlitzen und Einschnitte aufweist, wobei die Gruppen aus Einschnitten und Schlitzen der zwei gegenüberliegenden Schenkelabschnitte versetzt zueinander angeordnet sind.

Eine erfindungsgemäße Profilschiene lässt sich auf einfache Art verbiegen, da es die Kombination aus Schlitzen und Einschnitten einerseits ermöglicht, dass ein Abschnitt verlängert werden kann, bei gleichzeitiger Verkürzung des angrenzenden Abschnittes, ohne dass eine Verformung des Profils, d. h. dessen Abmessungen, erfolgt. Hierbei ist die Bereitstellung von Schlitzen und Einschnitten eine sehr einfache Art und Weise, die in einem zusätzlichen Bearbeitungsschritt während der Herstellung der Profilschiene erfolgen kann, und somit ohne Probleme in das Herstellungsverfahren integriert werden kann.

Die Schlitze und Einschnitte in dem Bereich der Profilschiene ermöglichen hierbei ein Voneinander-weg-Bewegen bzw. Aufeinander-zu-Bewegen des Materials, wodurch die Biegung erzeugt wird.

Ferner wird durch die Bereitstellung des Stegelementes eine ausreichende Flexibilität des Einschnitts und Schlitzes erzielt, wobei gleichzeitig die Stabilität des Materials und damit des Profils erhalten bleibt.

Da in jedem Abschnitt wenigstens eine Gruppe von Schlitzen und Einschnitten ausgebildet ist, wobei die Gruppen unter einem vorbestimmten Abstand zueinander angeordnet sind, ist es möglich, die Biegeposition konkret zu bestimmen, wie auch die Stärke der Biegung, so dass die Profilschiene als solche noch ausreichend Stabilität besitzt, um problemlos auch gerade verlegt zu werden.

Ferner sind die Gruppen aus Einschnitten und Schlitzen in jedem der beiden Abschnitte versetzt zueinander angeordnet ist. D. h. die Aufweitung des einen Abschnittes erfolgt an einer anderen Position als das Verkürzen des anderen Abschnittes. Hierdurch ist es einerseits möglich, der Profilschiene eine größere Stabilität zu verleihen, andererseits können Biegungen einfacher mit einem engeren Durchmesser erfolgen. Der Abstand der versetzt zueinander angeordneten Gruppen stellt ein Maß der möglichen Biegung dar.

Erfindungsgemäß kann vorgesehen sein, dass die Gruppe von Einschnitten und Schlitzen in Form eines Streckgitters ausgebildet ist. Die Form eines Streckgitters ist eine sehr einfache Möglichkeit, die Schlitze und Einschnitte in das Profil einzubringen, und lässt sich bei ausreichender Stabilität leicht verbiegen.

Gemäß einer weiteren bevorzugten Ausführungsform sind wenigstens die Schlitze als Ausstanzungen ausgebildet. Einerseits sind Ausstanzungen einfach in das Metallblech einzubringen, andererseits ist es durch das in dem Bereich der Ausstanzung fehlende Material besonders einfach, die Verbiegung des Profils zu erzielen.

Die vorliegende Erfindung ermöglicht es demzufolge auch als C-Schiene oder U-Schiene ausgebildete Profilschienen solchermaßen auszugestalten, dass sie auf einfache Art und Weise gebogen werden können.

Vorteilhafterweise erstreckt sich hierbei jeder neben einem Einschnitt angeordnete Schlitz von einem Schenkelabschnitt über den Basisabschnitt bis in den gegenüberliegenden Schenkelabschnitt hinein. Hierdurch kann eine ausreichende Verbiegung des Profils als gesamtes erzielt werden.

Gemäß einer weiteren bevorzugten Ausführungsform erstreckt sich jeder in einer Linie bzw. in Verlängerung zu einem Einschnitt ausgebildete Schnitt von einem Schenkelabschnitt bis wenigstens zwei Drittel in den Basisabschnitt hinein. In Kombination mit dem benachbarten Schlitz, der sich über das ganze Basisteil erstreckt, wird hierdurch eine definierte Biegung bzw. Aufweitung des Profils im Bereich des Basisabschnitts ermöglicht, wobei das Profil noch ausreichende Reststabilität aufweist.

In einer anderen bevorzugten Ausführungsform kann der einer Gruppe aus Schlitzen und Einschnitten gegenüberliegende Schenkelabschnitt eine Durchtrittsöffnung aufweisen. Die entsprechende Durchtrittsöffnung liegt der Gruppe aus Schlitzen und Einschnitten folglich unmittelbar gegenüber und stellt eine Montageöffnung dar, mithilfe welcher die Profilschiene durch geeignete Mittel an ihrer Position fixiert werden kann.

Gleichermaßen können die Durchtrittsöffnungen auch dazu dienen Kabel aus der Schiene oder in die Schiene zu führen. Hierbei hat es sich als besonders vorteilhaft erwiesen, wenn die Durchtrittsöffnungen umgebördelt werden, um so Beschädigungen der Kabel zu vermeiden.

Besonders bevorzugt kann die Profilschiene als biegbare C-Schiene ausgebildet sein. Gemäß eines anderen Gegenstandes wird durch die vorliegende Erfindung ein Verfahren zur Herstellung des beschriebenen offenen biegbaren Profils bereitgestellt, umfassend die Schritte des Einbringens von Schlitzen und/oder Einschnitten in ein flaches Blechband, wobei die Schlitze und die Einschnitte quer zur Längserstreckung des Bandes verlaufen, und Biegen des Bandes in die vorbestimmte Form. Es zeigt sich, dass das erfindungsgemäße Verfahren sehr einfach ist und sich ohne große Probleme in bereits bestehende Fertigungsstraßen integrieren lässt.

Gemäß einer bevorzugten Ausführungsform können die Schlitze und Einschnitte hierbei durch Stanzen oder Perforieren eingebracht werden. Beide Verfahren haben sich in diesem Zusammenhang als besonders geeignet erwiesen.

Ferner betrifft die vorliegende Erfindung die Verwendung des beschriebenen offenen Profils zum Abdichten und/oder Verschließen einer Fuge. Ein entsprechendes Profil kann problemlos in eine bestehende Fuge eingeführt werden, wobei die Profilschiene mit dem Basisabschnitt voran in die Fuge eingeführt wird, und wobei durch die Bereitstellung der Kombination aus Schlitzen und Einschnitten die Profilschiene ohne Probleme auch bei einer nicht geraden Fuge in diese eingeführt werden kann, das sich die Schiene leicht biegen lässt. Eine entsprechende Profilschiene kann anschließend durch Abdichtmaterial aufgefüllt werden, wobei die Durchtrittsöffnungen an den Seiten eine ausreichende Verbindung des Abdichtmaterials mit der Innenseite der Fuge gewährleistet.

Die Erfindung wird im Folgenden anhand von Zeichnungen näher erläutert.

Es zeigen:
Figur 1 eine dreidimensionale Ansicht auf eine erfindungsgemäße offene Profilschiene im geraden Zustand, wobei der Basisabschnitt unten angeordnet ist,
Figur 2 eine Aufsicht auf den Basisabschnitt der in Figur 1 dargestellten Profilschiene, wobei sich die Profilschiene im gebogenen Zustand befindet,
Figur 3 eine Aufsicht auf einen Schenkelabschnitt der erfindungsgemäßen Profilschiene in gebogenem Zustand,
Figur 4 eine dreidimensionale Aufsicht auf den Basisabschnitt und den verkürzten Schenkelabschnitt einer erfindungsgemäßen Profilschiene in gebogenem Zustand,
Figur 5 eine Ansicht in die offene, auf dem Basisabschnitt angeordnete, Profilschiene in gebogenem Zustand, und
Figur 6 eine dreidimensionale Ansicht auf den Basisabschnitt und den verlängerten Schenkelabschnitt der erfindungsgemäßen Profilschiene im gebogenen Zustand.

In den nachfolgenden Ausführungsformen werden gleiche Teile durch gleiche Bezugszeichen bezeichnet. Sollten in einer Darstellung Bezugszeichen enthalten sein, die in der zugehörigen Figurenbeschreibung nicht näher ausgeführt werden, so wird auf die vorangehende oder nachfolgende Figurenbeschreibung Bezug genommen.

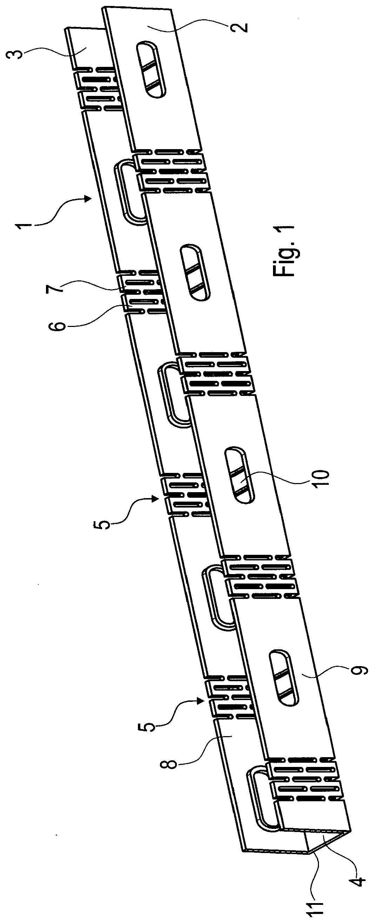

Figur 1 zeigt ein längliches Profil 1, bei welchem es sich um ein sogenanntes C-Profil handelt. Das Profil 1 umfasst einen Basisabschnitt 4 mit zwei an den Kanten des Basiselementes abgewinkelten Schenkelabschnitten 2, 3, die parallel zueinander angeordnet sind.

Wie ferner in Figur 1 zu erkennen ist, weisen die beiden Schenkel mehrere unter vorbestimmtem Abstand zueinander angeordnete durchbrochene Bereiche 5 auf. Hierbei besteht jeder durchbrochene Bereich 5 aus einer Gruppe von Einschnitten 6 und Schlitzen 7, die parallel zueinander angeordnet sind. Sowohl die Einschnitte 6 als auch die Schlitze verlaufen hierbei quer zu der Längserstreckung der Profilschiene. Hierbei bezeichnet ein Einschnitt 6 eine schlitzförmige Öffnung, die unmittelbar an der Kante des Schenkelabschnittes 2, 3 angeordnet ist und daher eine Unterbrechung des Schenkelabschnittes zur Kante hin darstellt, also unten offen ist.

Im Gegensatz dazu ist ein Schlitz 7 direkt in dem Material ausgeführt, und weist an beiden Endpunkten des Schlitzes Bereiche des Schenkelabschnittes auf, ist also nach unten nicht offen. Sowohl die Einschnitte als auch die Schlitze erstrecken sich durch das ganze Material hindurch.

Wie ferner in Figur 1 gezeigt ist, können die Kombinationen aus Einschnitten 6 und Schlitzen 7 der durchbrochenen Bereiche 5 in Form eines Streckgitters ausgebildet sein, d. h. es können mehrere Schlitze bzw. Einschnitte und Schlitze hintereinander und Nebeneinander unter Ausbildung eines Stegelementes 8 bzw. eines Gittersteges zwischen diesen angeordnet sein, wobei die unmittelbar benachbarten Schnitte bzw. Einschnitte versetzt zueinander angeordnet sind, so dass die zwischen zwei Schlitzen 7 oder zwischen einem Einschnitt 6 und einem Schlitz 7 ausgebildeten Stegelemente 8 auch versetzt zueinander angeordnet sind.

Bei der dargestellten Ausführungsformen sind insgesamt sechs Reihen von Einschnitten und/oder Schlitzen nebeneinander vorgesehen. Jede andere Anzahl an Reihen kann jedoch auch eingesetzt werden. Hierbei können sich jeweils zwei benachbarte Anordnungen bzw. Reihen an Schlitzen und Einschnitten wiederholen, so dass die dritte bzw. fünfte der ersten Reihe von Schlitzen und Einschnitten entspricht und die vierte bzw. sechste der zweiten, wie in der dargestellten Ausführungsform verwirklicht.

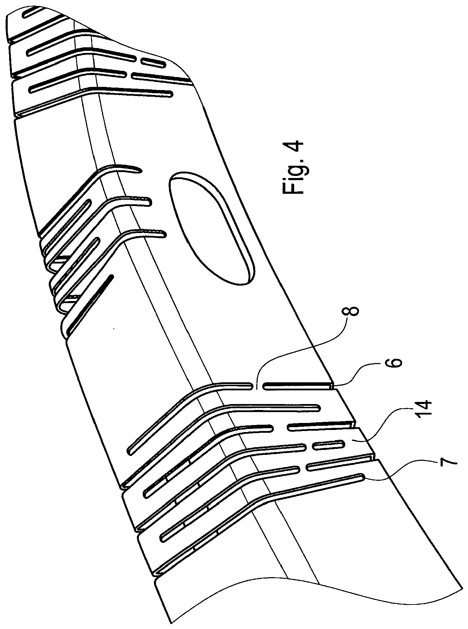

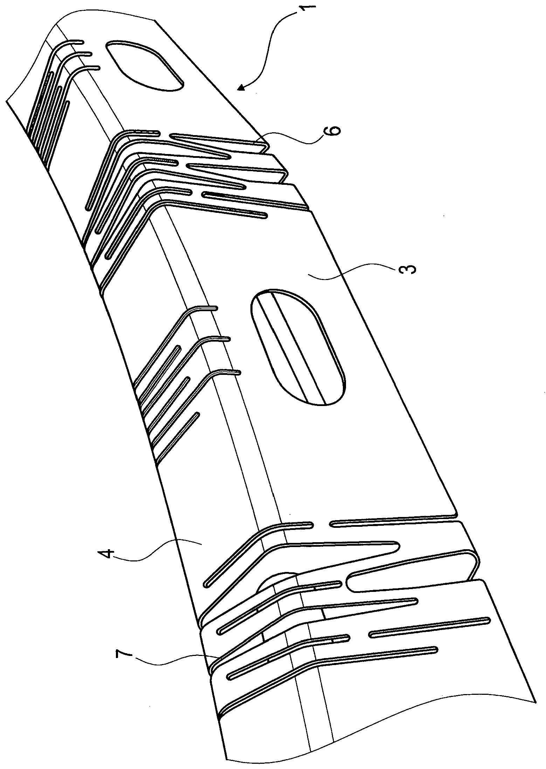

Vergleicht man Figur 4 oder 6 mit Figur 1, wird deutlich, dass sich die Schlitze 7 von dem Schenkelabschnitt 2, 3 mindestens bis in den Basisabschnitt 4 erstrecken, wobei sich jeder zweite Schlitz 7 sogar bis in den gegenüberliegenden Schenkelabschnitt 2, 3 erstreckt, bis zu einer Position etwas unterhalb der Biegekante 9" zwischen Schenkelabschnitt 2, 3 und Basisabschnitt 4.

Vor der genaueren Beschreibung der Funktion des durchbrochenen Bereichs 5 soll in Bezug auf Figur 1 noch festgehalten werden, dass die durchbrochenen Bereiche 5 in den einander gegenüberliegenden Schenkelabschnitten 2, 3 versetzt zueinander angeordnet sind, so dass die durchbrochenen Bereiche 5 des Schenkelabschnitts 3 jeweils mittig zwischen zwei durchbrochenen Bereichen 5 des Schenkelabschnitts 2 angeordnet sind. Ferner ist in dem Bereich jedes Schenkels, der einem durchbrochenen Bereich 5 des gegenüberliegenden Schenkels entspricht, eine Durchtrittsöffnung angeordnet, welche als Langloch ausgebildet ist, wobei das Langloch in Richtung der Längserstreckung der Profilschiene orientiert ist. Die Langlöcher können zusätzlich umgebördelt werden, insbesondere in den Fällen, in denen beispielsweise Kabel durch die Langlöcher in oder aus der Schiene geführt werden. Hierdurch entsteht ein abgerundeter Rand, der Beschädigungen der Kabel ausschließt.

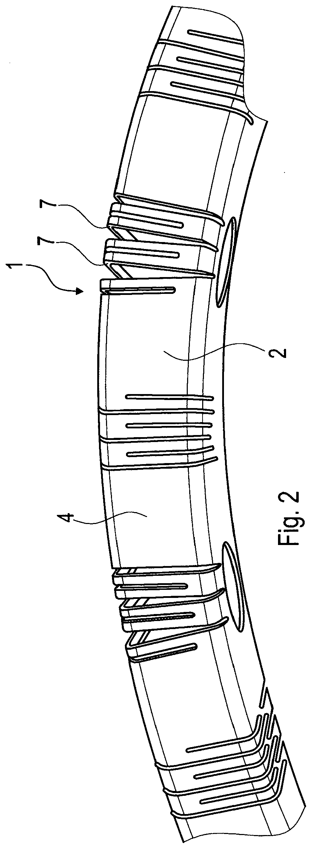

Der durchbrochene Bereich 5 im teilweise gebogenen Zustand ist in den Figuren 2-6 dargestellt. Jeder durchbrochene Bereich 5 besteht in der dargestellten Ausführungsform aus sechs Reihen mit Einschnitten bzw. Schlitzen, wobei, wie schon ausgeführt, jede gerade bzw. ungerade Reihe identisch ausgebildet ist. Hierbei wird jede ungerade Reihe, wobei sich der Begriff "ungerade" auf eine Darstellung des durchbrochenen Bereichs 5 von rechts nach links bezieht, von einem Einschnitt 6 und sich einem daran anschließenden Schlitz 7 ausgebildet, welche durch ein Stegelement 8 voneinander getrennt sind. Der Einschnitt 6 erstreckt sich hierbei in etwa bis zur Hälfte des Schenkelabschnitts und der Schlitz, welcher in einer Geraden zu dem Einschnitt 6 verläuft, ist über den verbleibenden Teil des Schenkelabschnitts 2 angeordnet und erstreckt sich weiter über die Biegekante 9 bis in den Basisabschnitt 4. Hierbei verläuft sich der Schlitz wenigstens über zwei Drittel der Breite des Basisabschnittes und endet einen vorbestimmten Abschnitt vor der parallelen Biegekante 11. Die weiteren ungeraden Reihen sind identisch zu der ersten ausgebildet.

Die sich unmittelbar an die erste ungerade Reihe anschließende gerade Reihe wird lediglich von einem einzigen Schlitz 7 ausgebildet, welcher im Bereich des Schenkelabschnitts 2 ausgebildet ist und sich über den ganzen Basisabschnitt bis in den gegenüberliegenden Schenkelabschnitt 3 erstreckt. Der Schlitz 7 beginnt hierbei einen vorbestimmten Abstand von der Kante 12 des Schenkelabschnitts 2, wobei der Abstand zwischen der Kante 12 des Schenkelabschnitts bis zu dem Beginn des Schlitzes 7 in etwa dem Abstand zwischen dem Ende des Schlitzes 7 der ersten ungeraden Reihe bis zur Biegekante 11 entspricht. Durch diese Anordnung der Einschnitte bzw. Schlitze zueinander wird eine Gitterstruktur erzeugt, die erkennbar wird, wenn das Metall im Bereich der durchbrochenen Bereiche 5 auseinandergezogen wird. Die zwischen den Schlitzen bzw. Einschnitte der benachbarten Reihen ausgebildeten Gitterstege können hierbei verformt werden und werden lediglich im Bereich der Stegelemente 8 zusammengehalten.

Durch die abwechselnde Ausbildung von Einschnitten 6 mit versetzt zu diesen angeordneten Schlitzen entstehen im Bereich der Kante des Schenkelabschnittes "Zähne" 14.

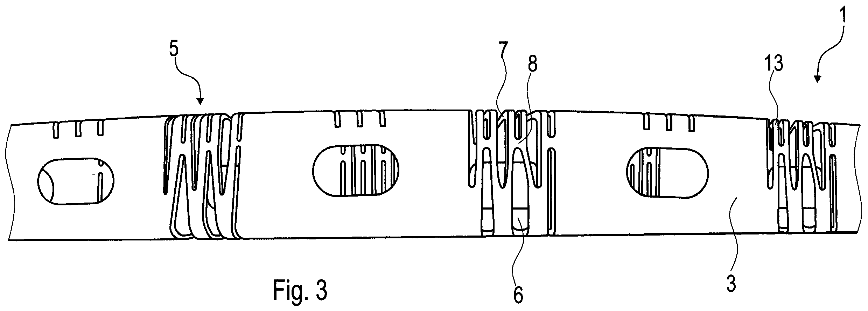

In Figur 3 ist der Schenkelabschnitt 3 der gebogenen Profilschiene dargestellt, wobei die Profilschiene in Richtung des Schenkelabschnitts 2 gebogen wurde, d. h. der Schenkelabschnitt 3 wird in Richtung der Längserstreckung verlängert, wohingegen sich der Schenkelabschnitt 2 in dieser Richtung verkürzt. Wie dargestellt weitet sich der durchbrochene Bereich 5 auf, d. h. die zwischen den Schlitzen 7 und Einschnitten 6 ausgebildeten Gitterstege 13 werden verformt und entfernen sich voneinander, d. h. sie verlaufen nicht länger parallel zueinander.

Durch diese Verformung wird das Profil in den durchbrochenen Bereich 5 aufgeweitet, wobei durch die zwischen Einschnitten und Schlitzen bereitgestellten Stegelemente 8 die Aufweitung kontrolliert erfolgt. D. h. die Verformung findet in erster Linie im Bereich der Einschnitte 6, sowie im Bereich der langen Schlitze 7 statt, die sich über beide Schenkelabschnitte, sowie den ganzen Basisabschnitt 4 erstrecken. Die sich an die Einschnitte 6 anschließenden Schlitze 7 weisen im Gegensatz dazu, wie auch in Figur 6 dargestellt ist, in welcher der Schenkelabschnitt 3 sowie der Basisabschnitt 4 in perspektivischer Ansicht dargestellt ist, keine Verformung auf.

Je nachdem wie stark die Profilschiene gebogen wird, umso stärker werden die einzelnen Elemente auseinandergezogen. Durch das Bereitstellen der Stegelemente 8 zum Abtrennen der auf die Einschnitte 6 folgenden Schlitze 7 wird eine ausreichende Stabilität der Profilschiene sichergestellt, wie auch ausreichend Material im Bereich der Biegung.

Die Auswirkung der Biegung des Schenkelabschnittes 3 auf den Schenkelabschnitt 2 ist in den Figuren 2 und 4 dargestellt, wobei abwechselnd die durchbrochenen Bereiche 5 des Schenkelabschnitts 2 sowie des Schenkelabschnitts 3 dargestellt sind. Es wird deutlich, dass lediglich jeder zweite durchbrochene Bereich 5 aufgeweitet ist, d. h. lediglich die Bereiche, die sich über den Schenkelabschnitt 3 erstrecken, wohingegen die im Bereich des Schenkelabschnitts 2 angeordneten durchbrochenen Bereiche 5 im Wesentlichen zumindest im Bereich des Basisabschnitts 4 unverändert erscheinen.

Dass auch im Bereich des Schenkelabschnitts 2 eine Verformung des durchbrochenen Bereiches 5 stattgefunden hat, ist in Figur 4 erkennbar. Hier wird deutlich, dass sich das Material der Profilschiene 1 im Bereich der Einschnitte 6 aufeinander zu bewegt hat, und die durch die Einschnitte 6 ausgebildete "Zähne" 14 etwas nach innen ins Innere des Profils gedrückt werden. Zusätzlich wird der durchbrochene Bereich 5 auch im Bereich der langen Schlitze 7 etwas zusammengedrückt.

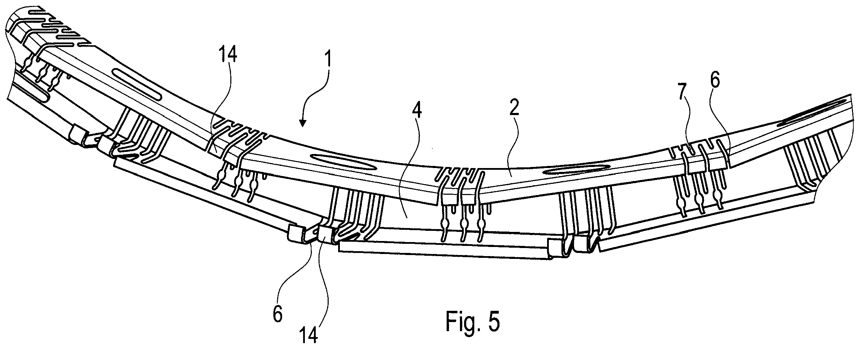

Schließlich ist in Figur 5 eine Aufsicht in das offene Profil der verformten Profilschiene dargestellt, während die einzelnen Elemente des Schenkelabschnittes 3, welcher verlängert wurde, nunmehr bedingt durch die Einschnitte 6 voneinander weiter beabstandet sind, wird der gesamte Schenkelabschnitt 2 eher in Richtung des Schenkelabschnitts 3 gedrückt, wobei die durch die Einschnitte 6 voneinander beabstandeten Elemente fast aufeinander zu liegen kommen.

Im Einsatz wird die offene Profilschiene wie in Figur 5 dargestellt in eine Fuge eingeführt werden, so dass der Basisabschnitt 4 unten angeordnet ist und sich die Schenkelabschnitte 2, 3 nach oben erstrecken. Ein entsprechend eingesetztes Profil kann der Fuge folgend gebogen werden. Nach erfolgtem Einbringen der offenen Profilschiene kann diese mit einer zusätzlichen Abdichtmasse aufgefüllt und verschlossen werden. Die im Bereich der Schenkelabschnitte 2, 3 bereitgestellten Durchtrittsöffnungen 10 stellen hierbei sicher, dass die Auffüllmasse sich nicht nur mit der Schiene, sondern auch mit dem umgebenden Material fest verbindet und stellen somit eine zusätzliche Verbindung mit dem Umgebungsmaterial sicher.

## Patentansprüche

1. Offene Profilschiene (1) mit einem Basisabschnitt (4) und zwei sich an den Basisabschnitt (4) und von diesen abgewinkelten Schenkelabschnitten (2, 3), wobei die Profilschiene (1) quer zu ihrer Längserstreckung Schlitze (7) und Einschnitte (6) aufweist, welche parallel zueinander ausgebildet sind,
wobei die Schlitze (7) direkt in dem Material ausgeführt sind, die Endpunkte des Schlitzes (7) nicht offen sind, und die Einschnitte (6) unmittelbar an einer Kante eines Schenkelabschnitts (2, 3) zu dieser Kante offen ausgebildet sind, und die Schlitze (7) und Einschnitte (6) in den gegenüberliegenden Schenkelabschnitten (2, 3) und dem Basisabschnitt (4) ausgebildet sind,
wobei sich zumindest die Schlitze (7) von einem der Schenkelabschnitte (2,3) in den anschließenden Basisabschnitt (4) erstrecken,
wobei quer zur Längserstreckung der Profilschiene
in Verlängerung auf jeden Einschnitt (6) ein Schlitz (7) unter Ausbildung eines Stegelementes (8) folgt,
**dadurch gekennzeichnet, dass**
jeder Schenkelabschnitt (2, 3) mehrere unter einem vorbestimmten Abstand zueinander angeordnete Gruppen von Schlitzen (7) und Einschnitten (6)
aufweist, wobei die Gruppen aus Einschnitten (6) und Schlitzen (7) der zwei gegenüberliegenden Schenkelabschnitte (2, 3) versetzt zueinander angeordnet sind.

2. Offene Profilschiene (1) nach Anspruch 1, **dadurch gekennzeichnet, dass** in jeder Gruppe von Einschnitten (6) und Schlitzen (7) wenigstens zwei Einschnitte (6) und zwei Schlitze (7) nebeneinander angeordnet sind.

3. Offene Profilschiene (1) nach Anspruch 1 oder 2, **dadurch gekennzeichnet, dass** die Gruppe von Einschnitten (6) und Schlitzen (7) in Form eines Streckgitters ausgebildet ist.

4. Offene Profilschiene (1) nach einem der Ansprüche 1 bis 3, **dadurch gekennzeichnet, dass** die Schlitze (7) als Ausstanzungen ausgebildet sind.

5. Offene Profilschiene (1) nach Anspruch 1, **dadurch gekennzeichnet, dass** sich jeder neben einem Einschnitt (6) angeordnete Schlitz (7) von einem Schenkelabschnitt (2, 3) über dem Basisabschnitt (4) bis in den gegenüberliegenden Schenkelabschnitt (2, 3) erstreckt.

6. Offene Profilschiene (1) nach Anspruch 1 oder 5, **dadurch gekennzeichnet, dass** sich jeder in einer Linie zu einem Einschnitt (6) ausgebildete Schlitz (7) von einem Schenkelabschnitt (2, 3) bis wenigstens zwei Drittel in den Basisabschnitt (4) erstreckt.

7. Offene Profilschiene (1) nach einem der Ansprüche 1 bis 6, **dadurch gekennzeichnet, dass** der einer Gruppe aus Schlitzen (7) und Einschnitten (6) gegenüberliegende Schenkelabschnitt eine Durchtrittsöffnung aufweist

8. Offene Profilschiene nach einem der Ansprüche 1 bis 7, **dadurch gekennzeichnet, dass** die Profilschiene als biegbare C-Schiene ausgebildet ist.

9. Verfahren zur Herstellung eines offenen biegbaren Profils nach einem der Ansprüche 1-8, umfassend die Schritte
Einbringen von Schlitzen und/oder Einschnitten in ein flaches Blechband, wobei die Schlitze und die Einschnitte quer zur Längserstreckung des Bandes verlaufen und Biegen des Bandes.

10. Verfahren nach Anspruch 9, **dadurch gekennzeichnet, dass** die Schlitze und Einschnitte durch Stanzen oder Perforieren eingebracht werden.

11. Verwenden des offenen Profils nach einem der Ansprüche 1-8 zum Abdichten und/oder Verschließen einer Fuge.

## Claims

1. Open profile rail (1) comprising a base portion (4) and two leg portions (2, 3) adjoining the base portion (4) and angled therefrom, wherein the profile rail (1) comprises, in a direction transverse to its longitudinal extension, slots (7) and incisions (6) which are made parallel to one another,
wherein the slots (7) are directly formed in the material, the end points of the slot (7) are not open, and the incisions (6) are directly formed on an edge of a leg portion (2, 3) to be open towards said edge, and the slots (7) and incisions (6) are formed in the opposite leg portions (2, 3) and the base portion (4),
wherein at least the slots (7) extend from one of the leg portions (2, 3) into the adjoining base portion (4),
wherein in a direction transverse to the longitudinal extension of the profile rail a slot (7) follows in extension to each incision (6) to form a web element (8),
**characterized in that** each leg portion (2, 3) comprises a plurality of groups of slots (7) and incisions (6) arranged at a predetermined distance from one another, wherein the groups of incisions (6) and slots (7) of the two opposite leg portions (2, 3) are arranged offset to one another.

2. Open profile rail (1) according to claim 1, **characterized in that** in each group of incisions (6) and slots (7) at least two incisions (6) and two slots (7) are arranged side by side.

3. Open profile rail (1) according to claim 1 or 2, **characterized in that** the group of incisions (6) and slots (7) is designed in the form of an expanded metal grid.

4. Open profile rail (1) according to any one of claims 1 to 3, **characterized in that** the slots (7) are formed as punched-out portions.

5. Open profile rail (1) according to claim 1, **characterized in that** each slot (7) arranged next to an incision (6) extends from a leg portion (2, 3) over the base portion (4) into the opposite leg portion (2, 3).

6. Open profile rail (1) according to claim 1 or 5, **characterized in that** each slot (7) formed in a line relative to an incision (6) extends from a leg portion (2, 3) up to at least two thirds into the base portion (4).

7. Open profile rail (1) according to any one of claims 1 to 6, **characterized in that** the leg portion opposite to a group of slots (7) and incisions (6) comprises a passage opening.

8. Open profile rail (1) according to any one of claims 1 to 7, **characterized in that** the profile rail is formed as a bendable C rail.

9. Method for producing an open bendable profile according to any one of claims 1 to 8, comprising the steps of
introducing slots and/or incisions into a flat sheet-metal strip, wherein the slots and the incisions extend in a direction transverse to the longitudinal extension of the strip and bending the strip.

10. Method according to claim 9, **characterized in that** the slots and incisions are introduced by way of punching or perforating.

11. Use of the open profile according to any one of claims 1 to 8 for sealing and/or closing a joint.

## Revendications

1. Rail profilé ouvert (1) comprenant un tronçon de base (4) et deux tronçons d'aile (2, 3) se raccordant au tronçon de base (4) en étant coudé par rapport à celui-ci, le rail profilé (1) présentant, transversalement à son étendue longitudinale, des fentes (7) et des encoches (6), qui sont réalisées parallèlement les unes aux autres, rail profilé
dans lequel les fentes (7) sont réalisées directement dans le matériau, les points d'extrémité de la fente (7) ne sont pas ouverts, et les encoches (6) sont réalisées directement au niveau d'un bord d'un tronçon d'aile (2, 3) en étant ouvertes vers ce bord, et les fentes (7) et encoches (6) sont réalisées dans les tronçons d'aile opposés (2, 3) et le tronçon de base (4),
dans lequel au moins les fentes (7) s'étendent de l'un des tronçons d'aile (2, 3) jusque dans le tronçon de base (4) s'y raccordant, et
dans lequel, transversalement à l'étendue longitudinale du rail profilé, une fente (7) suit chaque encoche (6) dans son prolongement en formant un élément de nervure (8),
**caractérisé en ce que**
chaque tronçon d'aile (2, 3) comporte plusieurs groupes de fentes (7) et d'encoches (6), agencés selon une distance d'espacement prédéterminée entre eux, les groupes de fentes (7) et d'encoches (6) des deux tronçons d'aile (2, 3) opposés, étant agencés de manière décalée les uns par rapport aux autres.

2. Rail profilé ouvert (1) selon la revendication 1, **caractérisé en ce que** dans chaque groupe d'encoches (6) et de fentes (7) sont agencées côte à côte au moins deux encoches (6) et deux fentes (7).

3. Rail profilé ouvert (1) selon la revendication 1 ou la revendication 2, **caractérisé en ce que** le groupe d'encoches (6) et de fentes (7) est réalisé sous la forme d'un treillis de matériau déployé.

4. Rail profilé ouvert (1) selon l'une des revendications 1 à 3, **caractérisé en ce que** les fentes (7) sont réalisées sous forme de découpes matricées.

5. Rail profilé ouvert (1) selon la revendication 1, **caractérisé en ce que** chaque fente (7) agencée à côté d'une encoche (6) s'étend à partir d'un tronçon d'aile (2, 3), en passant par le tronçon de base (4), jusque dans le tronçon d'aile (2, 3) opposé.

6. Rail profilé ouvert (1) selon la revendication 1 ou la revendication 5, **caractérisé en ce que** chaque fente (7) réalisée en étant alignée sur une ligne avec une encoche (6), s'étend à partir d'un tronçon d'aile (2, 3) jusque dans le tronçon de base (4) sur au moins un tiers de l'étendue de ce dernier.

7. Rail profilé ouvert (1) selon l'une des revendications 1 à 6, **caractérisé en ce que** le tronçon d'aile opposé à un groupe de fentes (7) et d'encoches (6), présente une ouverture de passage.

8. Rail profilé ouvert selon l'une des revendications 1 à 7, **caractérisé en ce que** le rail profilé est réalisé sous la forme d'un rail en forme de C flexible.

9. Procédé de fabrication d'un profilé ouvert flexible selon l'une des revendications 1 - 8, comprenant les étapes suivantes
réalisation de fentes et/ou d'encoches dans une simple bande de tôle plate, les fentes et les encoches s'étendant transversalement à l'étendue longitudinale de la bande, et
pliage de la bande.

10. Procédé selon la revendication 9, **caractérisé en ce que** les fentes et les encoches sont réalisées par découpage par matriçage ou par perforation.

11. Utilisation du profilé ouvert selon l'une des revendications 1 - 8 pour assurer l'étanchéité et/ou pour fermer un joint, une tranchée ou rainure.
